# EUROPÄISCHE PATENTSCHRIFT

(11) **EP 3 148 829 B1**
(45) Veröffentlichungstag und Bekanntmachung des Hinweises auf die Patenterteilung: **30.10.2019**
(21) Anmeldenummer: 15713301.8
(22) Anmeldetag: 26.03.2015
(51) Int. Cl.: B60K 11/08

(54) **VERFAHREN ZUM BETRIEB EINER KÜHLERGRILLANORDNUNG**
METHOD FOR OPERATING A RADIATOR GRILL ARRANGEMENT
PROCÉDÉ DE COMMANDE D'UN ENSEMBLE GRILLE DE RADIATEUR

(30) Priorität: 27.05.2014 DE 102014007910
(43) Veröffentlichungstag der Anmeldung: 05.04.2017
(73) Patentinhaber: Daimler AG, 70327 Stuttgart (DE)
(72) Erfinder: JAKOBS, Holger, 72135 Dettenhausen (DE)
(74) Vertreter: JENSEN & SON
(86) Internationale Anmeldenummer: PCT/EP2015/000647
(87) Internationale Veröffentlichungsnummer: WO 2015/180807

(56) Entgegenhaltungen:
- DE-A1-102012 012 677
- US-A1- 2012 097 464
- US-A1- 2013 086 839
- US-A1- 2014 039 765
- US-A1- 2014 102 817

## Beschreibung

Die Erfindung betrifft ein Verfahren zum Betrieb einer Kühlergrillanordnung eines Fahrzeuges, gemäß Oberbegriff des Anspruchs 1.

Aus der DE 10 2012 012 677 A1 sind eine Kühlergrillanordnung für ein Fahrzeug und ein Verfahren zum Betrieb der Kühlergrillanordnung bekannt. Die Kühlergrillanordnung umfasst zumindest einen einen Hauptlufteinlass einfassenden Tragrahmen, eine Anzahl von Verschlussklappen, die zwischen einer Verschlussstellung und einer Öffnungsstellung um eine Klappendrehachse drehbar gelagert sind. An den Verschlussklappen sind Klappenhebel angeformt oder ausgebildet, die mit einem Schubriegel in Wirkverbindung stehen, wobei die Kühlergrillanordnung weiterhin einen Stellantrieb zur Positionierung der Verschlussklappen umfasst. Zudem ist ein Klappenrahmen zur Aufnahme der Verschlussklappen, des Schubriegels und des Stellantriebes vorgesehen, wobei der Klappenrahmen zweiteilig ausgebildet ist und an dem Tragrahmen einer Kühlerverkleidung kraft-, form- und/oder stoffschlüssig befestigt ist.

Ein gattungsgemäßes Verfahren geht aus der US 2014/0102817 A1 hervor.

Der Erfindung liegt die Aufgabe zugrunde, ein gegenüber dem Stand der Technik verbessertes Verfahren zum Betrieb einer Kühlergrillanordnung eines Fahrzeuges anzugeben, bei dem das Risiko einer Beschädigung einer Antriebsmechanik und/oder der zumindest einen Verschlussklappe im Betrieb der Kühlergrillanordnung zumindest verringert ist

Die Aufgabe wird erfindungsgemäß hinsichtlich des Verfahrens durch die in Anspruch 1 angegebenen Merkmale gelöst.

Vorteilhafte Ausgestaltungen der Erfindung sind Gegenstand der Unteransprüche.

Ein Verfahren zum Betrieb einer Kühlergrillanordnung mit zumindest einer zwischen einer Geschlossenstellung und einer Öffnungsstellung drehbar gelagerten Verschlussklappe sieht vor, dass die zumindest eine Verschlussklappe mittels einer Antriebseinheit bei Eintreten zumindest eines Auslösekriteriums in die Geschlossenstellung positioniert wird. Das Verfahren zeichnet sich dadurch aus, dass die Antriebseinheit zumindest bei erreichter Geschlossenstellung der zumindest einen Verschlussklappe automatisch um einen vorgegebenen Winkel entgegen einer Positionierungsrichtung zur Einnahme der Geschlossenstellung bewegt wird, wobei die zumindest eine Verschlussklappe in der Geschlossenstellung verbleibt.

Die zumindest eine Verschlussklappe wird bei Eintreten des zumindest einen Auslösekriteriums in die vorgegebene Geschlossenstellung positioniert, wodurch eine Öffnung oder Teilöffnung der zumindest einen Verschlussklappe, insbesondere während eines Parkens des Fahrzeuges, korrigiert wird. Dabei wird die zumindest eine Verschlussklappe in die Geschlossenstellung überführt, so dass eine Position der Verschlussklappe insbesondere in Bezug auf einen weiteren Betrieb der Kühlergrillanordnung vorgegeben eingestellt werden kann.

Mittels des Verfahrens kann im Wesentlichen ausgeschlossen werden, dass durch eine Manipulation an der zumindest einen Verschlussklappe am abgestellten Fahrzeug und/oder durch Einwirkungen von Schnee und/oder Eis eine dadurch bedingte ungleiche Klappenposition in der Geschlossen- und/oder der Öffnungsstellung auftritt.

Durch das Bewegen der Antriebseinheit entgegen der Positionierungsrichtung werden bzw. wird das Risiko einer Beschädigung einer Antriebsmechanik und/oder der zumindest einen Verschlussklappe aufgrund einer dauerhaften Einwirkung eines maximalen Antriebsdrehmomentes der Antriebseinheit zumindest verringert. Das heißt, mittels der Bewegung der Antriebseinheit entgegen der Positionierungsrichtung steht die Antriebsmechanik nicht mehr unter permanenter Vorspannung, wodurch ein Setzen thermoplastischer Materialien, aus denen Bestandteile der Antriebsmechanik gebildet sind, unter Temperatureinfluss minimiert wird.

Insbesondere wird eine maximale Verspannung in verhältnismäßig hoch belasteten Querschnitten der Antriebsmechanik verringert, wodurch mechanische Belastungen, wie zum Beispiel Erschütterungen, aus denen das Risiko von Beschädigungen resultiert, wie oben beschrieben, zumindest verringert werden.

Eine Weiterbildung des Verfahrens sieht vor, dass als Auslösekriterium ein Motorstart und/oder eine Türentriegelung des Fahrzeuges verwendet werden bzw. wird. Das heißt dass der Motorstart und/oder die Türentriegelung das Auslösekriterium zur automatischen Positionierung der zumindest einen Verschlussklappe darstellen bzw. darstellt.

In einer weiteren möglichen Ausführungsform wird im Anschluss an die Positionierung der Antriebseinheit um den vorgegebenen Winkel entgegen der Positionierungsrichtung eine Referenzfahrt der zumindest einen Verschlussklappe durchgeführt. Die Referenzfahrt dient dazu die Antriebsmechanik in Verbindung mit der zumindest einen Verschlussklappe in Bezug auf die Einnahme der Geschlossen- und die Öffnungsstellung zu überprüfen und gegebenenfalls einzustellen.

Zudem ist vorgesehen, dass ein Erreichen der Geschlossenstellung und der Öffnungsstellung bei Durchführung der Referenzfahrt durch eine Zunahme eines elektrischen Stromes der Antriebseinheit erfasst wird. Dadurch ist ein Erkennen einer Extremposition der zumindest einen Verschlussklappe vergleichsweise kostengünstig möglich, wobei in vorteilhafter Weise keine zusätzliche Erfassungseinheit zur Ermittlung einer Position, das heißt einer Extremposition, erforderlich ist.

Alternativ oder zusätzlich wird eine Position der Antriebseinheit mittels zumindest eines Hall-Sensors erfasst, welcher in eine Mechanik der Antriebseinheit integriert ist, die ein Gleichstrommotor sein kann.

Ausführungsbeispiele der Erfindung werden im Folgenden anhand von Zeichnungen näher erläutert.

Dabei zeigen:
- Fig. 1: schematisch eine Kühlergrillanordnung für ein Fahrzeug mit Verschlussklappen in einer Geschlossenstellung und
- Fig. 2: schematisch einen Verfahrensablauf zur Ansteuerung der Verschlussklappen.

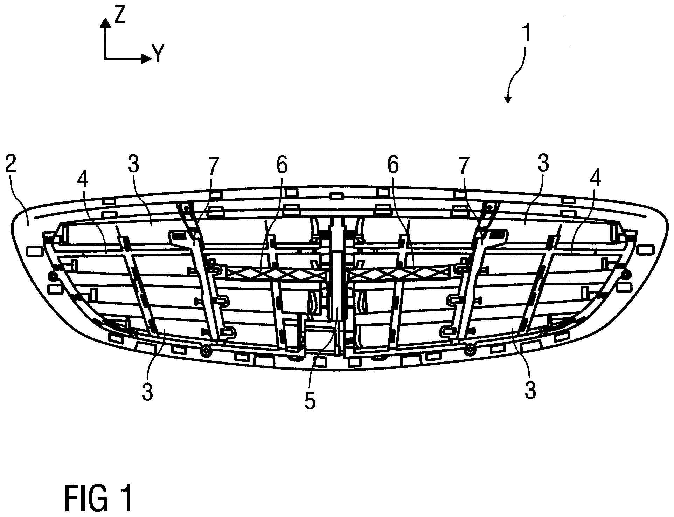

In Figur 1 ist eine Kühlergrillanordnung 1 für ein nicht näher dargestelltes Fahrzeug in einer Rückansicht gezeigt.

Die Kühlergrillanordnung 1 umfasst einen einen Hauptlufteinlass einfassenden Tragrahmen 2, eine Anzahl Verschlussklappen 3, welche in dem vorliegenden Ausführungsbeispiel eine Geschlossenstellung aufweisen, einen Klappenrahmen 4, eine Antriebseinheit 5, zwei Antriebshebel 6 und zwei Schubriegel 7.

Mittels der Kühlergrillanordnung 1 kann die Haupteinlassöffnung in Abhängigkeit von Betriebszuständen des Fahrzeuges geöffnet und geschlossen werden. Insbesondere wird die Haupteinlassöffnung bei einem geringen Wärmeaufkommen oder bei ausgeschalteter Brennkraftmaschine verschlossen, um eine unnötige Kühlung durch Fahrtwind und/oder einen unerwünschten Wärmeaustritt durch die Haupteinlassöffnung zu vermeiden. Darüber hinaus kann ein Verschließen der Haupteinlassöffnung zu einer erheblichen Verbesserung des Luftwiderstandbeiwertes bei vergleichsweise hoher Fahrgeschwindigkeit führen.

Die Kühlergrillanordnung 1 weist zwei Klappenreihen auf, die jeweils vier Verschlussklappen 3 umfassen und nebeneinander angeordnet sind. Dabei sind die Verschlussklappen 3 in Bezug auf eine Fahrzeughochachse Z übereinander angeordnet. Zudem sind die Verschlussklappen 3 derart angeordnet, dass sich die Längsachsen der Verschlussklappen 3 senkrecht zur Fahrzeughochachse und parallel zur Fahrzeugquerachse Y erstrecken.

Die Verschlussklappen 3 sind zwischen der gezeigten Geschlossenstellung und einer nicht näher dargestellten Öffnungsstellung innerhalb ihrer Klappenreihe schwenkbar gelagert.

Zum Verstellen der jeweiligen Verschlussklappe 3 ist der jeweilige Schubriegel 7 einer Klappenreihe über einen Antriebshebel 6 mit der Antriebseinheit 5 verbunden. Die Antriebseinheit 5 ist in Bezug auf die Querausdehnung der Kühlergrillanordnung 1 und in Bezug auf die Fahrzeugquerachse Y mittig angeordnet und beiden Klappenreihen zugeordnet.

Der Antriebseinheit 5 ist mit einer nicht näher dargestellten Steuereinheit verbunden, mittels welcher in Abhängigkeit einer Umgebungstemperatur und/oder Betriebstemperatur der Brennkraftmaschine ein Steuersignal erzeugt und der Antriebseinheit zur Aktivierung derselben zugeführt wird. Entsprechend der Umgebungstemperatur und/oder Betriebstemperatur werden die Verschlussklappen 3 geöffnet oder geschlossen.

Wird ein Fahrbetrieb des Fahrzeuges beendet und das Fahrzeug geparkt, wird die Antriebseinheit 5 aktiviert und die Verschlussklappen 3 werden geschlossen.

Durch eine Manipulation an den Verschlussklappen 3 und/oder durch Einwirkungen von Eis und Schnee können die Verschlussklappen 3 ungleiche Positionierungen in der eingestellten Geschlossenstellung der Verschlussklappen 3 aufweisen. Beispielsweise sind einige Verschlussklappen 3 aufgrund geschmolzenen Eises und/oder Schnees geöffnet oder teilweise geöffnet, wobei andere Verschlussklappen 3 wiederum geschlossen sind.

Um einen Zustand ungleicher Verschlussklappenpositionen, insbesondere bei Fahrtantritt, weitestgehend ausschließen zu können, ist vorgesehen, dass die Antriebseinheit 5 bei einem Eintreten eines Auslösekriteriums aktiviert wird und die Verschlussklappen 3 in die Geschlossenstellung positioniert werden.

Bevorzugt werden die Verschlussklappen 3 bei Eintreten des Auslösekriteriums in die Geschlossenstellung, in die Öffnungsstellung und wieder in die Geschlossenstellung positioniert.

Als Auslösekriterium zur Positionierung der Verschlussklappen 3 in die Geschlossenstellung ist eine Türentriegelung, manuell und/oder ferngesteuert, und/oder ein Motorstart vorgegeben. Das heißt, dass im Fall der Entriegelung der Fahrzeugtüren und/oder beim Starten des Motors des Fahrzeuges die Antriebseinheit 5 angesteuert und aktiviert wird, so dass die Verschlussklappen 3 in die Geschlossenstellung verfahren werden.

Nach der Positionierung der Verschlussklappen 3 in die Geschlossenstellung kann, wie herkömmlich, eine Referenzfahrt der Verschlussklappen 3 in die Extrempositionen Geschlossenstellung und Öffnungsstellung durchgeführt werden. Ein Erreichen der jeweiligen Extremposition wird anhand eines Ansteigens eines Motorstromes erfasst. In einer Mechanik der Antriebseinheit 5 ist ein Hallsensor integriert, mittels dessen eine momentane Position der Antriebseinheit 5 ermittelt werden kann.

Ist eine der Verschlussklappen 3 oder sind mehrere der Verschlussklappen 3 aufgrund vorherrschender Witterungsbedingungen festgefroren, wird dieser Zustand ebenfalls anhand eines vergleichsweise hohen Motorstromes erfasst und eine entsprechende Fehlermeldung generiert.

Darüber hinaus ist vorgesehen, dass die Antriebseinheit 5, bei der es sich insbesondere um einen Gleichstrommotor handelt, bei einer Deaktivierung einer Zündung des Fahrzeuges automatisch um einen vorgegebenen Winkel entgegen einer Positionierungsrichtung zur Einnahme der Geschlossenstellung bewegt wird. Die Antriebseinheit 5 wird um den vorgegebenen Winkel entgegen der Positionierungsrichtung bewegt, wobei die Verschlussklappen 3 in der Geschlossenstellung verbleiben.

Diese gegenläufige Bewegung der Antriebseinheit 5 dient dazu, ein verhältnismäßig wirkendes hohes Kraftniveau bei der Positionierung der Verschlussklappen 3, insbesondere in die Geschlossenstellung, in einem Zustand der Verschlussklappen 3 in der Geschlossenstellung und vorzugsweise auch in der Öffnungsstellung als Extrempositionen zu vermindern. Dadurch kann einem übermäßigen Setzen, insbesondere im Kunststoff der Antriebsmechanik, vorgebeugt werden.

Dieses übermäßige Setzen im Kunststoff resultiert aus einer Selbsthemmung im Schneckengetriebe der Antriebsmechanik bei wirkendem hohem Kraftniveau, welches aufrechterhalten wird.

Durch die gegenläufige Bewegung der Antriebseinheit 5 wirkt kein hohes Antriebsmoment der Antriebseinheit 5 auf die Verschlussklappen 3 und/oder weiterer Bestandteile, so dass das Risiko dadurch bedingter Beschädigungen zumindest verringert werden kann.

Die Bewegung der Antriebseinheit 5 entgegen der Positionierungsrichtung bewirkt, dass eine elastische Verspannung der Antriebsmechanik verringert wird.

Mittels der Kühlergrillanordnung 1 und des Verfahrens zum Betrieb der Kühlergrillanordnung 1 wird eingestellt, dass die Verschlussklappen 3 die gleichen Positionierungen, insbesondere bei Fahrtantritt, aufweisen.

Weiterhin werden aufgrund der Bewegung der Antriebseinheit 5 entgegen der Positionierungsrichtung Beschädigungen an den Verschlussklappen 3 und/oder weiterer Bestandteile der Antriebsmechanik aufgrund des wirkenden verhältnismäßig hohen Kraftniveaus zumindest verringert.

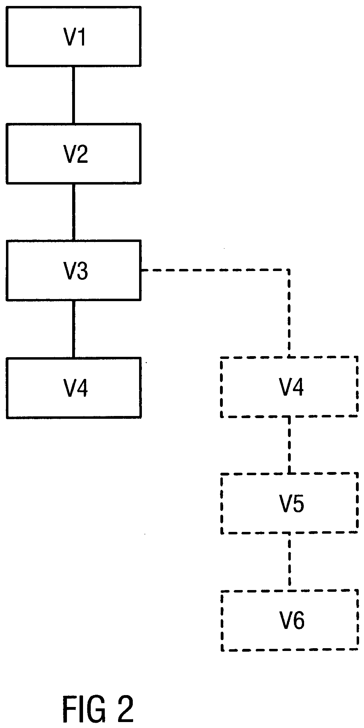

Figur 2 zeigt einen Verfahrensablauf zur Ansteuerung der Verschlussklappen 3 der Kühlergrillanordnung 1.

In einem ersten Verfahrensschritt V1 ist vorgesehen, dass die Verschlussklappen 3 bei einem Ende des Fahrbetriebes angesteuert und in die Geschlossenstellung positioniert werden.

Ein zweiter Verfahrensschritt V2 sieht vor, dass die Antriebseinheit 5 bei Deaktivierung der Zündung des Fahrzeuges automatisch um einen vorgegebenen Winkel entgegen einer Positionierungsrichtung zur Einnahme der Geschlossenstellung bewegt wird.

In einem dritten Verfahrensschritt V3 wird bei einer Türentriegelung, manuell und/oder ferngesteuert, und/oder bei einem Motorstart die Antriebseinheit 5 aktiviert und die Verschlussklappen 3 werden erneut in die Geschlossenstellung positioniert, um somit beispielsweise aufgrund von vorherrschenden Witterungsbedingungen unterschiedliche Stellungen der Verschlussklappen 3 zu korrigieren.

In einem zusätzlichen vierten Verfahrensschritt V4 und in einem zusätzlichen fünften Verfahrensschritt V5 ist vorgesehen, die Verschlussklappen 3 anschließend in die Öffnungsstellung und wieder in die Geschlossenstellung zu verfahren.

In einem sechsten Verfahrensschritt V6 oder optional in einem vierten Verfahrensschritt V4 kann vorgesehen sein, eine aus dem Stand der Technik bekannte Referenzfahrt der Verschlussklappen 3 in die Extrempositionen Geschlossenstellung und Öffnungsstellung durchzuführen.

## Patentansprüche

1. Verfahren zum Betrieb einer Kühlergrillanordnung (1) eines Fahrzeuges mit zumindest einer zwischen einer Geschlossenstellung und einer Öffnungsstellung drehbar gelagerten Verschlussklappe (3), wobei die zumindest eine Verschlussklappe (3) mittels einer Antriebseinheit (5) bei Eintreten zumindest eines Auslösekriteriums in die Geschlossenstellung positioniert wird,
**dadurch gekennzeichnet, dass**
die Antriebseinheit (5) zumindest bei erreichter Geschlossenstellung der zumindest einen Verschlussklappe (3) automatisch um einen vorgegebenen Winkel entgegen einer Positionierungsrichtung zur Einnahme der Geschlossenstellung bewegt wird, wobei die zumindest eine Verschlussklappe (3) in der Geschlossenstellung verbleibt.

2. Verfahren nach Anspruch 1,
**dadurch gekennzeichnet, dass**
als Auslösekriterium ein Motorstart und/oder eine Türentriegelung des Fahrzeuges verwendet werden beziehungsweise wird.

3. Verfahren nach einem der vorhergehenden Ansprüche,
**dadurch gekennzeichnet, dass**
im Anschluss an die Positionierung der Verschlussklappen (3) und der Antriebseinheit (5) eine Referenzfahrt der Antriebseinheit (5) und der zumindest einen Verschlussklappe (3) durchgeführt wird.

4. Verfahren nach Anspruch 3,
**dadurch gekennzeichnet, dass**
ein Erreichen der Geschlossenstellung und der Öffnungsstellung bei Durchführung der Referenzfahrt durch eine Zunahme eines elektrischen Stromes der Antriebseinheit (5) erfasst wird.

5. Verfahren nach einem der vorhergehenden Ansprüche,
**dadurch gekennzeichnet, dass**
eine momentane Position der Antriebseinheit (5) mittels zumindest eines Hall-Sensors erfasst wird.

## Claims

1. Method for operating a radiator grille assembly (1) of a vehicle having at least one cover flap (3) rotatably mounted between a closed position and an opening position, wherein the at least one cover flap (3) is positioned in the closed position by means of a drive unit (5) on the occurrence of at least one trigger criterion,
**characterised in that**
the drive unit (5) is, at least when the at least one cover flap (3) has reached the closed position, automatically moved by a predetermined angle against a positioning direction for adopting the closed position, the at least one cover flap (3) remaining on the closed position.

2. Method according to claim 1,
**characterised in that**
an engine start and/or the unlocking of a door of the vehicle can be or is used as a trigger criterion.

3. Method according to any of the preceding claims,
**characterised in that**
following the positioning of the cover flap (3) and the drive unit (5), a reference run of the drive unit (5) and the at least one cover flap (3) is performed.

4. Method according to claim 3,
**characterised in that**
the reaching of the closed position and the opening position during a reference run is detected from an increase of an electric current of the drive unit (5).

5. Method according to any of the preceding claims,
**characterised in that**
a current position of the drive unit (5) is detected by means of at least one Hall sensor.

## Revendications

1. Procédé de fonctionnement d'un système de calandre (1) d'un véhicule automobile comprenant au moins un clapet de fermeture (3) monté en rotation entre une position fermée et une position ouverte, ledit clapet de fermeture (3) pouvant être positionné au moyen d'une unité d'entraînement (5) dans la position fermée lorsqu'au moins un critère de déclenchement se produit, **caractérisé en ce que** l'unité d'entraînement (5) se déplace automatiquement, au moins une fois que ledit clapet de fermeture (3) atteint la position fermée, selon un angle prédéfini dans le sens opposé à une direction de positionnement pour prendre la position de fermeture, ledit clapet de fermeture (3) demeurant dans la position fermée.

2. Procédé selon la revendication 1, **caractérisé en ce qu'**en tant que critère de déclenchement on se sert par exemple d'un démarrage de moteur et/ou d'un déverrouillage de porte du véhicule automobile.

3. Procédé selon l'une quelconque des revendications précédentes, **caractérisé en ce qu'**à la suite du positionnement du clapet de fermeture (3) et de l'unité d'entraînement (5) est effectué un démarrage de référence de l'unité d'entraînement (5) et dudit clapet de fermeture (3).

4. Procédé selon la revendication 3, **caractérisé en ce qu'**il est détecté que la position de fermeture et la position d'ouverture sont atteintes lors du déplacement de référence par l'augmentation d'un courant électrique de l'unité d'entraînement (5).

5. Procédé selon l'une quelconque des revendications précédentes, **caractérisé en ce qu'**une position momentanée de l'unité d'entraînement (5) est détectée au moyen d'au moins un capteur à effet Hall.
